# FASCICULE DE BREVET EUROPEEN

(11) **EP 1 708 332 B1**
(45) Date de publication et mention de la délivrance du brevet: **17.01.2018**
(21) Numéro de dépôt: 06290488.3
(22) Date de dépôt: 28.03.2006
(51) Int. Cl.: H02H 3/33, H02H 9/04, H02H 7/30

(54) **Appareil électrique de protection contre les surtensions transitoires et installation le comportant**
Elektrische Schutzeinrichtung gegen transienten Überspannungen und entsprechende Schaltanlage
Electrical protection device against transient overvoltages, and installation using the same

(30) Priorité: 31.03.2005 FR 0503164
(43) Date de publication de la demande: 04.10.2006
(73) Titulaire: Legrand France, 87000 Limoges (FR); Legrand SNC, 87000 Limoges (FR)
(72) Inventeur: Carreaud, Christian, 87700 Aixe sur Vienne (FR); Hyvernaud, Laurent, 87640 Razes (FR)
(74) Mandataire: Santarelli

(56) Documents cités:
- EP-A- 0 385 832
- DE-A1- 10 116 172
- US-A1- 2003 086 225
- US-A1- 2003 151 874
- US-B1- 6 212 048
- BACHL H ET AL: "UBERSPANNUNGSSCHUTZ ENTWICKLUNG VON TECHNIK UND NORMUNG" ELEKTROTECHNIK UND INFORMATIONSTECHNIK, SPRINGER VERLAG, WIEN, AT, vol. 112, no. 5, 1 mai 1995 (1995-05-01), pages 216-221, XP000507208 ISSN: 0932-383X

## Description

### DOMAINE DE L'INVENTION

L'invention a trait à la protection contre les surtensions électriques transitoires, en particulier d'origine atmosphérique.

### ARRIÈRE-PLAN TECHNOLOGIQUE

On sait qu'une varistance disposée entre un pôle de phase et un pôle de neutre voire un pôle de terre convient particulièrement bien pour fournir une telle protection, grâce à sa capacité à écrêter les surtensions transitoires, y compris du type provoqué par la foudre.

On sait également que les varistances ont une durée de vie limitée et qu'en fin de vie, elles peuvent soit monter progressivement en température, soit se mettre en court-circuit brutalement sans passer par une phase de montée en température.

Afin de maintenir la sécurité lors de la fin de vie d'une varistance par montée en température, on utilise un déconnecteur thermique disposé en série avec la varistance entre le pôle de neutre et le pôle de phase, lequel déconnecteur s'ouvre lorsqu'un seuil de température prédéterminé est atteint.

Pour maintenir la sécurité sans faire déclencher le disjoncteur principal d'installation en cas de fin de vie par court-circuit, on utilise un disjoncteur divisionnaire disposé en amont de la varistance.

En pratique, pour mettre en oeuvre de tels circuits dans les tableaux électriques d'installation au format appelé « modulaire », la varistance et le déconnecteur thermique sont contenus dans un boîtier tandis qu'un disjoncteur modulaire conventionnel est associé à ce boîtier.

Afin de simplifier le câblage des tableaux électriques, il a déjà été proposé, notamment par la demande de brevet français 2 851 369, de rassembler le boîtier contenant la varistance et le déconnecteur thermique et le boîtier disjoncteur en un seul ensemble constructif ou encore de remplacer le disjoncteur par un fusible.

Cependant, un tel ensemble constructif unique reste encore relativement encombrant tandis que le fusible capable de supporter une onde de foudre correspondant à une capacité standard de parafoudre (intensité nominale Iₙ de 5 kA et intensité maximale Iₘₐₓ de 10 kA en onde 8/20 µs selon la norme NF EN 61643-11) ne pourrait se déclencher en cas de court-circuit de la varistance que postérieurement au déclenchement du disjoncteur principal d'installation tel que le disjoncteur d'abonné en France, de sorte que la continuité de service n'est pas assurée.

La demande de brevet européen 0 385 832 enseigne, pour garantir cette sélectivité de déclenchement, de prévoir un interrupteur différentiel auquel sont associées deux varistances, cet interrupteur présentant une courbe de déclenchement décalée par rapport à celle d'un disjoncteur amont dans le sens qui fait déclencher l'interrupteur différentiel avant le disjoncteur amont en cas de court-circuit de l'une ou l'autre des varistances.

L'invention vise à permettre la mise en oeuvre d'une protection contre les surtensions transitoires, en particulier d'origine atmosphérique, avec une varistance et les organes associés de déconnexion en fin de vie de celle-ci, sous un volume réduit tout en respectant la continuité de service.

L'invention propose à cet effet, sous un premier aspect, un appareil électrique de protection contre les surtensions transitoires, en particulier d'origine atmosphérique, adapté à faire partie d'une installation électrique présentant un disjoncteur à courbe de fonctionnement intensité-temps de déclenchement prédéterminée, comportant une première borne et une deuxième borne, chacune destinée à être reliée à une borne de départ respective dudit disjoncteur, ainsi qu'une troisième borne destinée à être reliée à la terre ; appareil caractérisé en ce qu'il comporte au moins deux branches disposées en parallèle entre ladite première borne et ladite deuxième borne, comportant chacune une varistance adaptée à écrêter une dite surtension transitoire et un fusible disposé en série avec ladite varistance, ledit fusible étant adapté à déclencher en cas de court-circuit de cette varistance et ayant une courbe de fonctionnement intensité-temps de déclenchement dans laquelle, pour chaque valeur d'intensité, la valeur de temps de déclenchement est inférieure à la valeur de temps de déclenchement donnée pour la même valeur d'intensité par ladite courbe de fonctionnement dudit disjoncteur, grâce à quoi un court-circuit d'une varistance dudit appareil ne fait pas déclencher ledit disjoncteur.

La mise en parallèle d'au moins deux branches comportant chacune une varistance et un fusible a pour effet que chaque fusible, en cas de surtension transitoire, n'est soumis qu'à une certaine proportion de l'intensité totale traversant l'appareil, cette proportion restant compatible avec les capacités des fusibles existants en pratique.

Bien que l'appareil suivant l'invention comporte un nombre de composants relativement important (plusieurs fusibles de protection contre les courts-circuits et autant de varistances), le très faible volume occupé par un fusible ou par une varistance en comparaison du volume occupé par un disjoncteur permet à l'appareil selon l'invention d'être bien plus compact qu'un appareil intégrant un disjoncteur.

L'appareil selon l'invention offre en outre une certaine homogénéité entre le caractère non réutilisable d'une varistance parvenue en fin de vie et le caractère non réutilisable d'un fusible ayant déclenché (fondu).

Selon des caractéristiques préférées pour des raisons de simplicité, de commodité et d'économie de mise en oeuvre :
- chaque dit fusible a une tenue au plus égale à une intensité nominale Iₙ de 3 kA et à une intensité maximale Iₘₐₓ de 5,5 kA en onde 8/20 µs conformément à la norme NF EN 61643-11 ;
- ledit appareil comporte en outre un éclateur disposé entre ladite deuxième borne et ladite troisième borne ;
- chaque dite branche comporte en outre un déconnecteur thermique disposé en série avec ladite varistance et ledit fusible que comporte cette branche et sensible à la température de cette varistance ;
- au moins une desdites première borne et deuxième borne est reliée à une desdites branches par un déconnecteur thermique ;
- ledit appareil comporte, en outre desdites branches, un déconnecteur thermique disposé entre lesdites branches et ladite deuxième borne ; et/ou
- ledit appareil comporte, en outre desdites branches, un déconnecteur thermique disposé entre lesdites branches et ladite première borne.

L'invention vise également, sous un deuxième aspect, une installation électrique comportant un appareil tel qu'exposé ci-dessus et un disjoncteur présentant une courbe de fonctionnement intensité-temps de déclenchement dans laquelle, pour chaque valeur d'intensité, la valeur de temps de déclenchement est supérieure à la valeur de temps de déclenchement donnée pour la même valeur d'intensité par la courbe de fonctionnement de chaque fusible que comporte ledit appareil, grâce à quoi un court-circuit d'une varistance dudit appareil ne fait pas déclencher ledit disjoncteur.

### BRÈVE DESCRIPTION DES DESSINS

L'exposé de l'invention sera maintenant poursuivi par la description détaillée d'exemples de réalisation, donnée ci-après à titre illustratif et non limitatif à l'appui des dessins annexés. Sur ces dessins :
- la figure 1 est une représentation schématique d'une installation électrique conforme à l'invention ;
- la figure 2 est une représentation schématique du circuit électrique de l'appareil de protection contre les surtensions électriques transitoires conforme à l'invention que comporte cette installation ;
- la figure 3 est un graphique montrant sur une même échelle d'intensité, portée en abscisse, et sur une même échelle de temps, portée en ordonnée, la courbe de fonctionnement du disjoncteur principal de l'installation illustrée sur la figure 1 et la courbe de fonctionnement de chaque fusible que comporte l'appareil dont le circuit électrique est illustré sur la figure 2 ; et
- les figures 4 et 5 sont des représentations similaires à la figure 2 mais pour deux variantes de réalisation.

### DESCRIPTION DÉTAILLÉE D'EXEMPLES DE RÉALISATION PRÉFÉRÉS

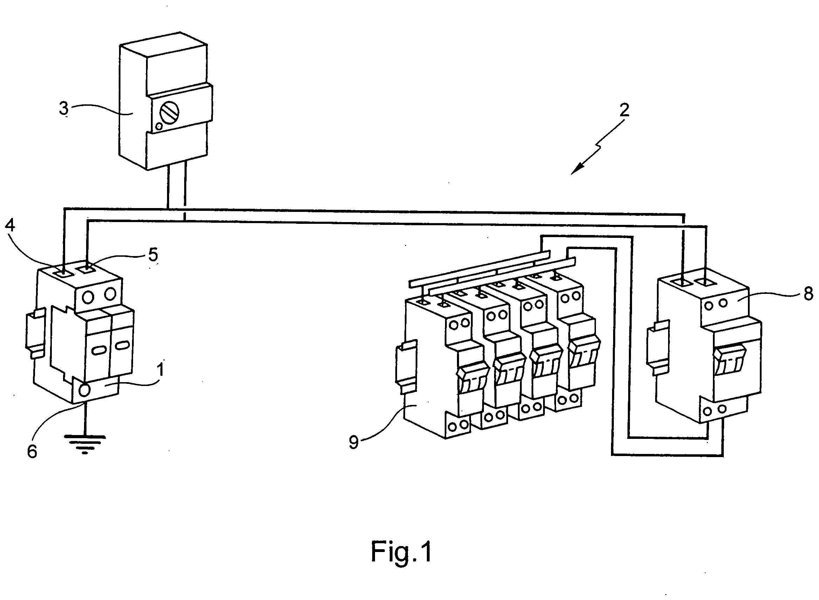

L'installation électrique 2 représentée schématiquement sur la figure 1 comporte un disjoncteur principal 3, un appareil électrique 1 de protection contre les surtensions transitoires, un appareil 8 de protection de tête et des appareils 9 de protection individuelle.

Le disjoncteur principal 3 est ici un disjoncteur français d'abonné, raccordé, en amont, à un compteur d'énergie électrique (non représenté) lui-même raccordé au réseau de distribution électrique (non représenté).

Les appareils 1, 8 et 9 sont du type, prévu pour être disposé dans un tableau, appelé « modulaire », c'est-à-dire se présentant sous la forme d'un boîtier globalement parallélépipédique présentant deux faces latérales, une face arrière, une face inférieure, une face avant et une face supérieure, avec la distance entre les faces latérales qui est égale à une ou plusieurs fois une largeur de base, appelée « module », qui est de l'ordre de 18 mm.

Chacun des appareils 1, 8 et 9 présente classiquement, dans sa face arrière, une échancrure de montage sur un rail de support tandis que sa face supérieure et sa face inférieure présentent des orifices d'accès à des bornes de raccordement.

L'appareil 1 de protection contre les surtensions transitoires présente dans sa face supérieure deux orifices donnant accès à des bornes 4 et 5 de raccordement respectivement à un pôle de phase et à un pôle de neutre, les bornes 4 et 5 étant ici raccordées respectivement à une borne de départ de phase et à une borne de départ de neutre du disjoncteur 3.

La face inférieure de l'appareil 1 présente un orifice d'accès à une borne de raccordement 6 à la terre de l'installation 2.

L'appareil de protection de tête 8, ici un interrupteur différentiel, présente dans sa face supérieure deux orifices donnant accès à des bornes de raccordement d'arrivée raccordées respectivement à la borne de départ de phase et à la borne de départ de neutre du disjoncteur principal 3.

La face inférieure de l'appareil de tête 8 présente deux orifices donnant accès à des bornes de raccordement de départ, respectivement une borne de départ de phase et une borne de départ de neutre.

Chacun des appareils de protection individuelle 9, ici des disjoncteurs divisionnaires, présente dans sa face supérieure deux ouvertures donnant chacune accès à une borne de raccordement d'arrivée, connectée respectivement à la borne de départ de phase et à la borne de départ de neutre de l'appareil de protection de tête 8.

La face inférieure de chaque appareil 9 présente deux orifices donnant accès chacun à une borne de raccordement de départ, respectivement pour un pôle de phase et pour un pôle de neutre d'un circuit individuel, par exemple un circuit de prises de courant ou un circuit d'éclairage.

On voit que les appareils de protection 1 et 8 sont disposés en parallèle entre les bornes de départ du disjoncteur principal 3 tandis que les appareils de protection 9 sont disposés en parallèle, par leurs bornes d'arrivée, entre les bornes de départ de l'appareil 8.

D'une façon générale, l'installation électrique 2 est prévue pour être sélective, c'est-à-dire pour que le déclenchement d'un appareil de protection ne provoque pas le déclenchement des appareils de protection situés en amont. Ainsi, le déclenchement d'un appareil 9 ne provoque pas le déclenchement de l'appareil 8 tandis que le déclenchement de l'appareil 1 ou de l'appareil 8 ne provoque pas le déclenchement du disjoncteur 3.

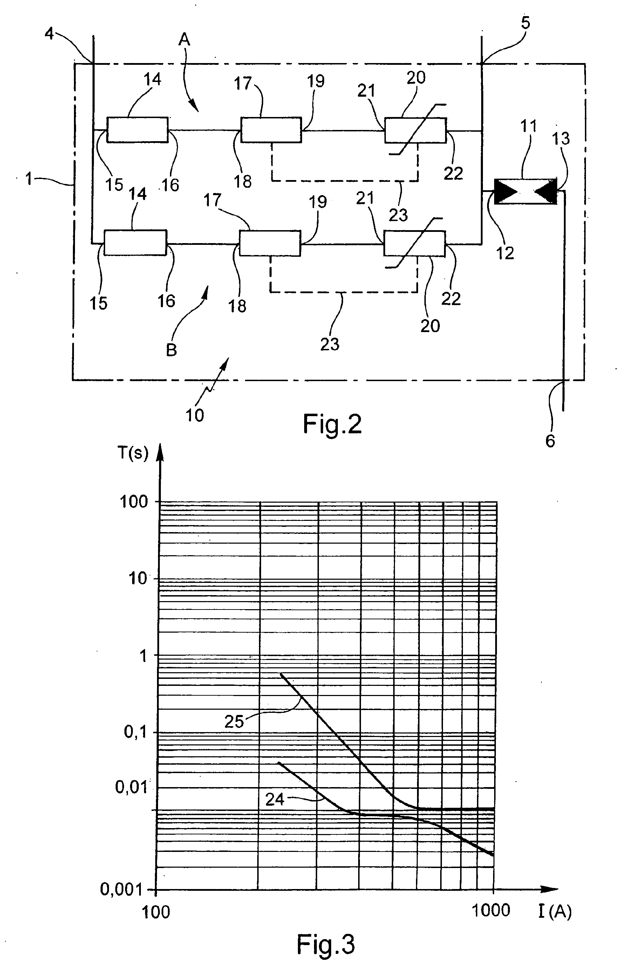

On va maintenant décrire à l'appui de la figure 2 le circuit électrique 10 interne à l'appareil 1.

Le circuit 10 comporte un éclateur 11 et deux branches A et B identiques comportant chacune un fusible 14, un déconnecteur thermique 17 et une varistance 20 disposés en série.

Les deux points de connexion 12 et 13 de l'éclateur 11 sont respectivement reliés directement à la borne de neutre 5 et directement à la borne de terre 6.

Dans chacune des branches A et B, le fusible 14 présente deux points de connexion 15 et 16, le déconnecteur thermique 17 présente deux points de connexion 18 et 19, tandis que la varistance 20 présente deux points de connexion 21 et 22.

Le point de connexion 15 de chacun des fusibles 14 est relié directement à la borne de phase 4 tandis que le point de connexion 22 de chaque varistance 20 est relié directement à la borne de neutre 5, et donc au point de connexion 12 de l'éclateur 11.

Dans chacune des branches A et B, le point de connexion 16 du fusible 14 et le point de connexion 18 du déconnecteur thermique 17 sont reliés directement l'un à l'autre tandis que le point de connexion 19 du déconnecteur thermique 17 est relié directement au point de connexion 21 de la varistance 20.

Les branches A et B sont ainsi disposées en parallèle entre la borne de raccordement de phase 4 et la borne de raccordement de neutre 5, avec chacune des branches A et B qui présente en série un fusible 14, un déconnecteur thermique 17 et une varistance 20.

Les différentes liaisons électriques sont ici réalisées par des fils conducteurs ou par des pistes conductrices d'une plaque de circuit imprimé.

Les déconnecteurs thermiques 17 sont ici des fusibles thermiques, chacun en liaison thermique avec la varistance 20 correspondante, ainsi qu'illustré sur la figure 2 par la ligne 23 en trait interrompu.

En cas de surtension transitoire, en particulier d'origine atmosphérique, par exemple une onde de foudre 8/20 µs telle que définie par la norme NF EN 61643-11, entre le pôle de neutre et le pôle de phase, et donc entre les bornes 4 et 5, l'impédance interne des varistances 20 s'abaisse quasi-instantanément de sorte que la surtension transitoire est écrêtée à une valeur sans danger pour les appareils électriques faisant partie des circuits individuels situés en aval des appareils de protection 9. Au cas où une surtension apparaît entre le pôle de neutre et le pôle de terre, et donc entre les bornes 5 et 6, l'éclateur 11 s'amorce et permet l'élimination de cette surtension.

Les caractéristiques de fonctionnement des appareils de protection 3, 8 et 9 sont telles qu'aucun d'eux ne déclenche lors de l'apparition d'une telle surtension.

Les déconnecteurs thermiques 17 et les fusibles 14 ne déclenchent pas davantage lors de l'apparition d'une telle surtension transitoire : ils sont en fait prévus dans l'appareil 1 pour réagir en fin de vie des varistances 20.

Lors d'une telle fin de vie, la varistance soit monte progressivement en température, soit se met brutalement en court-circuit sans passer par une phase de montée en température.

Dans le premier cas, le fusible thermique 17 relié à la varistance 20 montant en température se déclenche lorsqu'un seuil de température prédéterminé est atteint.

En cas de court-circuit de l'une des varistances 20, il se produit dans la branche correspondante A ou B une surintensité qui déclenche le fusible 14 de cette branche.

La courbe 24 illustrée sur la figure 3 est la courbe de fonctionnement intensité-temps de déclenchement du fusible 14.

On voit par exemple que pour un courant de 300 ampères, le temps de déclenchement du fusible 14 est légèrement inférieur à 0,02 seconde.

La courbe 25 illustrée sur la figure 3 illustre de la même façon la courbe de fonctionnement du disjoncteur principal 3.

Le tableau ci-après précise quelques points des courbes 24 et 25 :

| Intensité | Temps courbe 24 | Temps courbe 25 |
|---|---|---|
| 230 A | 0,04 s | 0,550 s |
| 360 A | 0,01 s | 0,070 s |
| 520 A | 0,0075 s | 0,0130 s |
| 700 A | 0,006 s | 0,010 s |
| 1 000 A | 0,0027 s | 0,010 s |
| 4 000 A | 0,00016 s | 0,010 s |

On voit que pour chaque valeur d'intensité, le temps de déclenchement donné par la courbe 24 est inférieur au temps de déclenchement donné par la courbe 25.

En conséquence, le court-circuit de l'une des varistances 20 de l'appareil 1 fera déclencher (fondre) le fusible 14 de la branche à laquelle appartient cette varistance 20, mais ne fera pas déclencher le disjoncteur principal 3.

Il est vrai que si les deux varistances 20 respectivement de la branche A et de la branche B se mettent simultanément en court-circuit, l'intensité totale qui aura circulé dans le disjoncteur principal 3 avant le déclenchement (fusion) des deux fusibles 14 est susceptible de faire déclencher le disjoncteur 3, mais en pratique il n'y a statistiquement quasiment aucune chance que les deux varistances 20 se mettent simultanément en court-circuit de fin de vie.

Les fusibles disponibles en pratique ne sont pas capables de résister sans déclencher au courant devant s'écouler dans un parafoudre de capacité standard, par exemple d'intensité nominale Iₙ de 5 kA et d'intensité maximale Iₘₐₓ de 10 kA pour une onde de foudre 8/20 µs suivant la norme NF EN 61643-11, mais ils sont néanmoins capables de supporter, suivant la même norme, une intensité nominale Iₙ de 2,5 kA et une intensité maximale Iₘₐₓ de 5 kA.

En prévoyant deux branches identiques A et B, l'intensité totale circulant entre les bornes 4 et 5 est divisée par deux dans chacune des branches A et B.

Ainsi, l'appareil 1 dont les fusibles 14 ont les caractéristiques susmentionnées est capable de supporter un courant nominal Iₙ de deux fois 2,5 kA, soit 5 kA et un courant maximal Iₘₐₓ de deux fois 5 kA, soit 10 kA.

Il est bien entendu possible de prévoir davantage que deux branches identiques pour avoir une capacité de protection plus élevée.

On voit que l'appareil 1 peut être raccordé directement au disjoncteur principal 3, la protection contre les courts-circuits de fin de vie de varistance étant assurée directement par l'appareil 1 grâce aux fusibles 14 qu'il comporte, contrairement aux appareils parafoudres conventionnels pour lesquels il faut prévoir un disjoncteur spécifique de protection interposé entre le disjoncteur principal tel que 3 et un tel appareil parafoudre conventionnel.

On notera que les fusibles conventionnels convenant pour assurer la sélectivité ont en général une tenue au plus égale à une intensité nominale Iₙ de 3 kA et une intensité maximale Iₘₐₓ de 5,5 kA pour une onde de foudre 8/20 µs suivant la norme NF EN 61643-11.

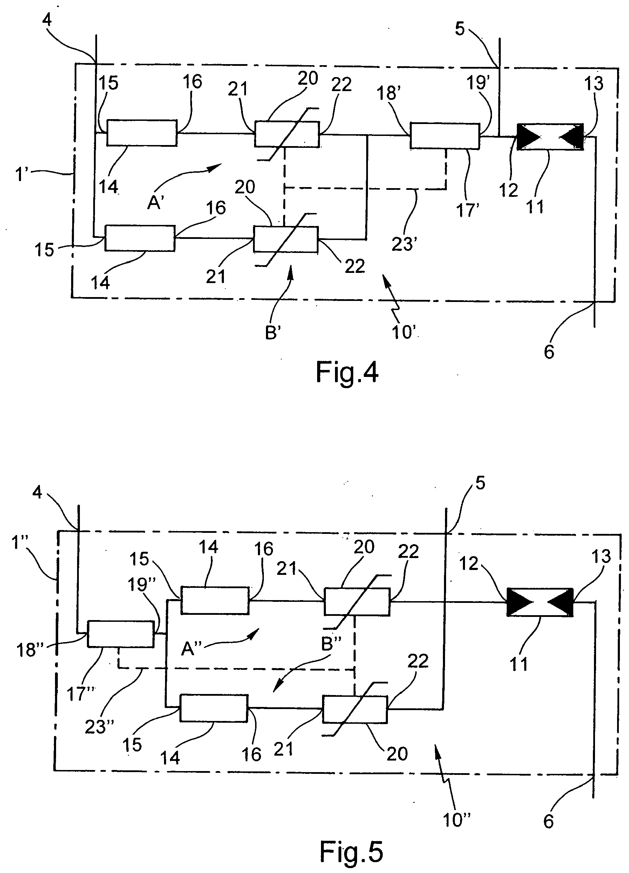

On va maintenant décrire la variante 1' de l'appareil 1 illustrée sur la figure 4. On a gardé pour les éléments identiques les mêmes références que pour l'appareil 1 tandis que pour les éléments semblables on a gardé les mêmes références numériques mais affectées d'un exposant '.

D'une façon générale, dans l'appareil 1', les deux déconnecteurs thermiques 17, chacun disposés entre un fusible 14 et une varistance 20, sont remplacés par un déconnecteur thermique unique 17' en liaison thermique avec chacune des varistances 20, ainsi qu'illustrée par la ligne 23' en trait interrompu, le déconnecteur 17' étant disposé entre les branches A' et B' et la borne de neutre 5.

L'appareil 1' comporte plus précisément deux branches A' et B' identiques disposées en parallèle, comportant chacune un fusible 14 et une varistance 20 disposés en série.

Le point de connexion 15 de chacun des fusibles 14 est relié directement à la borne de phase 4 tandis que le point de connexion 22 de chaque varistance 20 est relié directement au point de connexion 18' du déconnecteur thermique 17', le point de connexion 19' du déconnecteur 17' étant directement relié à la borne de neutre 5, et donc au point de connexion 12 de l'éclateur 11.

Dans chacune des branches A' et B', le point de connexion 16 du fusible 14 et le point de connexion 21 de la varistance 20 sont reliés directement l'un à l'autre.

Les branches A' et B' sont ainsi disposées en parallèle entre la borne de raccordement de phase 4 et le point de connexion 18' du déconnecteur thermique 17', avec chacune des branches A et B qui présente en série un fusible 14 et une varistance 20.

On va maintenant décrire la variante 1" de l'appareil 1 illustrée sur la figure 5. On a gardé pour les éléments identiques les mêmes références que pour l'appareil 1, tandis que pour les éléments semblables on a gardé les mêmes références numériques mais affectées d'un exposant ".

D'une façon générale, dans l'appareil 1", les deux déconnecteurs thermiques 17, chacun disposé entre un fusible 14 et une varistance 20, sont remplacés par un déconnecteur thermique 17" en liaison thermique avec chacune des varistances 20, ainsi qu'illustrée par la ligne 23" en trait interrompu, le déconnecteur 17" étant disposé entre les branches A" et B" et la borne de phase 4.

L'appareil 1" comporte plus précisément deux branches A" et B" identiques disposées en parallèle, comportant chacune un fusible 14 et une varistance 20 disposés en série.

Le point de connexion 18" du déconnecteur 17" est directement relié à la borne de phase 4. Le point de déconnexion 19" du déconnecteur 17" est relié directement au point de connexion 15 de chacun des fusibles 14. Le point de connexion 16 de chacun des fusibles 14 est directement relié au point de connexion 21 de la varistance 20 de la branche à laquelle appartient ce fusible 14. Le point de connexion 22 de chacune des varistances 20 est directement relié à la borne de neutre 5 et donc au point de connexion 12 de l'éclateur 11.

Les branches A" et B" sont ainsi disposées en parallèle entre la borne de raccordement de neutre 5 et le point de connexion 19" du déconnecteur 17".

Dans une variante non illustrée, ainsi qu'expliqué ci-dessus, il existe davantage que deux branches comportant chacune en série un fusible tel que 14 et une varistance telle que 20.

Dans encore une autre variante non illustrée, l'appareil de protection contre les surtensions transitoires est prévu pour une installation électrique de puissance nominale différente (courbe telle que 25 différente).

Dans encore une autre variante non illustrée, l'appareil de protection contre les surtensions transitoires est prévu pour une installation électrique polyphasée et comporte donc plusieurs bornes telles que 4 et au moins deux branches telles que A et B entre chaque borne telle que 4 et la borne telle que 5.

Dans d'autres variantes non illustrées, l'éclateur 11 est remplacé par un ou plusieurs autres organes électriques, par exemple une ou plusieurs varistances.

De nombreuses autres variantes sont possibles en fonction des circonstances, et l'on rappelle à cet égard que l'invention ne se limite pas aux exemples décrits et représentés.

## Revendications

1. Appareil électrique de protection contre les surtensions transitoires, en particulier d'origine atmosphérique, adapté à faire partie d'une installation électrique (2) présentant un disjoncteur (3) à courbe de fonctionnement (25) intensité-temps de déclenchement prédéterminée, comportant une première borne (4) et une deuxième borne (5), chacune destinée à être reliée à une borne de départ respective dudit disjoncteur (3), ainsi qu'une troisième borne (6) destinée à être reliée à la terre ; appareil comportant au moins deux branches (A, B ; A', B' ; A", B") disposées en parallèle entre ladite première borne (4) et ladite deuxième borne (5), comportant chacune une varistance (20) adaptée à écrêter une dite surtension transitoire, appareil **caractérisé en ce que** chaque branche comporte un fusible (14) disposé en série avec ladite varistance (20), ledit fusible étant adapté à déclencher en cas de court-circuit de cette varistance (20) et ayant une courbe de fonctionnement (24) intensité-temps de déclenchement dans laquelle, pour chaque valeur d'intensité, la valeur de temps de déclenchement est inférieure à la valeur de temps de déclenchement donnée pour la même valeur d'intensité par ladite courbe de fonctionnement (25) dudit disjoncteur (3), grâce à quoi un court-circuit d'une varistance (20) dudit appareil (1) ne fait pas déclencher ledit disjoncteur (3).

2. Appareil selon la revendication 1, **caractérisé en ce que** chaque dit fusible (14) a une tenue au plus égale à une intensité nominale Iₙ de 3 kA et à une intensité maximale Iₘₐₓ de 5,5 kA en onde 8/20 µs conformément à la norme NF EN 61643-11.

3. Appareil selon l'une quelconque des revendications 1 ou 2, **caractérisé en ce qu'**il comporte en outre un éclateur (11) disposé entre ladite deuxième borne (5) et ladite troisième borne (6).

4. Appareil selon l'une quelconque des revendications 1 à 3, **caractérisé en ce que** chaque dite branche (A, B) comporte en outre un déconnecteur thermique (17) disposé en série avec ladite varistance (20) et ledit fusible (14) que comporte cette branche et sensible à la température de cette varistance.

5. Appareil selon l'une quelconque des revendications 1 à 4, **caractérisé en ce qu'**au moins une desdites première borne (4) et deuxième borne (5) est reliée à une desdites branches (A', B' ; A", B") par un déconnecteur thermique (17' ; 17").

6. Appareil selon la revendication 5, **caractérisé en ce qu'**il comporte en outre desdites branches (A', B'), un déconnecteur thermique (17') disposé entre lesdites branches (A', B') et ladite deuxième borne (5).

7. Appareil selon la revendication 5, **caractérisé en ce qu'**il comporte, en outre desdites branches (A", B"), un déconnecteur thermique (17") disposé entre lesdites branches (A", B") et ladite première borne (4).

8. Installation électrique **caractérisée en ce qu'**elle comporte un appareil (1) de protection contre les surtensions transitoires selon l'une quelconque des revendications 1 à 7 et un disjoncteur (3) présentant une courbe de fonctionnement (25) intensité-temps de déclenchement dans laquelle, pour chaque valeur d'intensité, la valeur de temps de déclenchement est supérieure à la valeur de temps de déclenchement donnée pour la même valeur d'intensité par la courbe de fonctionnement (24) de chaque fusible (14) que comporte ledit appareil (1), grâce à quoi un court-circuit d'une varistance (20) dudit appareil (1) ne fait pas déclencher ledit disjoncteur (3).

## Patentansprüche

1. Elektrische Einrichtung zum Schutz vor transienten Überspannungen vor allem atmosphärischen Ursprungs, die dazu ausgebildet ist, Teil einer elektrischen Anlage (2) zu sein, die einen Schutzschalter (3) mit einer vorgegebenen Arbeitskennlinie (25) Stromstärke/Auslösezeit aufweist, mit einem ersten Anschluss (4) und einem zweiten Anschluss (5), die jeweils dazu bestimmt sind, mit einem entsprechenden Abgangsanschluss des Schutzschalters (3) verbunden zu sein, sowie einem dritten Anschluss (6), der dazu bestimmt ist, mit der Masse verbunden zu sein; wobei die Einrichtung wenigstens zwei Stränge (A, B; A', B'; A", B") umfasst, die zwischen dem ersten (4) und dem zweiten (5) Anschluss parallel geschaltet sind, wobei jeder einen Varistor (20) umfasst, der eine transiente Überspannung zu abschneiden vermag, wobei die Einrichtung **dadurch gekennzeichnet ist, dass** jeder Strang eine mit dem Varistor (20) in Reihe geschaltete Sicherung (14) umfasst, wobei die Sicherung bei einem Kurzschluss des Varistors (20) auszulösen vermag und eine Arbeitskennlinie (24) Stromstärke/Auslösezeit aufweist, bei der für jeden Stromstärkewert der Wert für die Auslösezeit niedriger ist als der Auslösezeitwert, der für den gleichen Stromstärkewert durch die Arbeitskennlinie (25) des Schutzschalters (3) gegeben ist, wodurch ein Kurzschluss eines Varistors (20) der Einrichtung (1) nicht das Auslösen des Schutzschalters (3) bewirkt.

2. Einrichtung nach Anspruch 1,
**dadurch gekennzeichnet, dass** jede Sicherung (14) ein Stehvermögen aufweist, das höchstens einem Nennstrom Iₙ von 3 kA und einer Maximalstärke Iₘₐₓ von 5,5 kA in einer Stromwelle von 8/20 µs gemäß der Norm NF EN 61643-11 entspricht

3. Einrichtung nach einem der Ansprüche 1 oder 2,
**dadurch gekennzeichnet, dass** sie ferner eine zwischen dem zweiten Anschluss (5) und dem dritten Anschluss (6) angeordnete Funkenstrecke (11) umfasst.

4. Einrichtung nach einem der Ansprüche 1 bis 3,
**dadurch gekennzeichnet, dass** jeder Strang (A, B) ferner ein thermisches Abschaltgerät (17) umfasst, das mit dem Varistor (20) und der Sicherung (14), die dieser Strang aufweist und die auf die Temperatur des Varistors anspricht, in Reihe geschaltet ist.

5. Einrichtung nach einem der Ansprüche 1 bis 4,
**dadurch gekennzeichnet, dass** wenigstens einer der ersten (4) und zweiten (5) Anschlüsse durch ein thermisches Abschaltgerät (17'; 17") mit einem der Stränge (A', B'; A", B") verbunden ist.

6. Einrichtung nach Anspruch 5,
**dadurch gekennzeichnet, dass** sie außer den Strängen (A', B') ein thermisches Abschaltgerät (17') umfasst, das zwischen den Strängen (A', B') und dem zweiten Anschluss (5) angeordnet ist.

7. Einrichtung nach Anspruch 5,
**dadurch gekennzeichnet, dass** sie außer den Strängen (A", B") ein thermisches Abschaltgerät (17") umfasst, das zwischen den Strängen (A", B") und dem ersten Anschluss (4) angeordnet ist.

8. Elektrische Anlage,
**dadurch gekennzeichnet, dass** sie eine Einrichtung (1) zum Schutz vor transienten Überspannungen nach einem der Ansprüche 1 bis 7 und einen Schutzschalter (3) umfasst, der eine Arbeitskennlinie (25) Stromstärke/Auslösezeit aufweist, bei der für jeden Stromstärkewert der Wert für die Auslösezeit höher ist als der Auslösezeitwert, der für den gleichen Stromstärkewert durch die Arbeitskennlinie (24) jeder Sicherung (14), die die Einrichtung aufweist, gegeben ist, wodurch ein Kurzschluss eines Varistors (20) der Einrichtung (1) nicht das Auslösen des Schutzschalters (3) bewirkt.

## Claims

1. Electrical apparatus for protection against transient overvoltages, in particular of atmospheric origin, which apparatus is suitable for forming part of an electrical installation (2) comprising a circuit breaker (3) having a predetermined intensity/trip-time operating curve (25), said apparatus comprising a first terminal (4) and a second terminal (5) that are each intended to be connected to one output terminal, respectively, of said circuit breaker (3), and a third terminal (6) intended to be earthed, said apparatus comprising at least two branches (A, B; A', B'; A", B") that are arranged in parallel between said first terminal (4) and said second terminal (5) and that each comprise a varistor (20) suitable for clipping such a transient overvoltage, said apparatus being **characterised in that** each branch comprises a fuse (14) arranged in series with said varistor (20), said fuse being able to blow in the event of a short circuit of said varistor (20) and having an intensity/trip-time operating curve (24) in which, for each intensity value, the trip-time value is less than the trip-time value given for the same intensity value by the operating curve (25) of the circuit breaker (3), as a result of which a short circuit of a varistor (20) of said apparatus (1) does not cause said circuit breaker (3) to trip.

2. Apparatus according to claim 1, **characterised in that** each fuse (14) has a rating of less than or equal to a nominal intensity Iₙ of 3 kA and a maximum intensity Iₘₐₓ of 5.5 kA with a 8/20 µs waveform, in accordance with NF EN 61643-11.

3. Apparatus according to either claim 1 or claim 2, **characterised in that** it further comprises a spark gap (11) arranged between said second terminal (5) and said third terminal (6).

4. Apparatus according to any of claims 1 to 3, **characterised in that** each branch (A, B) further comprises a thermal disconnector (17) that is arranged in series with said varistor (20) and said fuse (14) of said branch and that is sensitive to the temperature of said varistor.

5. Apparatus according to any of claims 1 to 4, **characterised in that** at least one of said first terminal (4) and second terminal (5) is connected to one of said branches (A', B'; A", B") by a thermal disconnector (17'; 17").

6. Apparatus according to claim 5, **characterised in that** it comprises, in addition to said branches (A', B'), a thermal disconnector (17') arranged between said branches (A', B') and said second terminal (5).

7. Apparatus according to claim 5, **characterised in that** it comprises, in addition to said branches (A", B"), a thermal disconnector (17") arranged between said branches (A", B") and said first terminal (4).

8. Electrical installation, **characterised in that** it comprises an apparatus (1) for protection against transient overvoltages according to any of claims 1 to 7 and a circuit breaker (3) having an intensity/trip-time operating curve (25) in which, for each intensity value, the trip-time value is greater than the trip-time value given for the same intensity value by the operating curve (24) of each fuse (14) of said apparatus (1), as a result of which a short circuit of a varistor (20) of said apparatus (1) does not cause said circuit breaker (3) to trip.
